# EUROPÄISCHE PATENTSCHRIFT

(11) **EP 4 238 757 B1**
(45) Veröffentlichungstag und Bekanntmachung des Hinweises auf die Patenterteilung: **24.12.2025**
(21) Anmeldenummer: 23159045.6
(22) Anmeldetag: 28.02.2023
(51) Int. Cl.: B32B 15/01, H01R 13/03, H01R 13/193, H01R 4/01

(54) **PLATTIERTES BIMETALL**
CLAD BIMETAL
BILAME PLAQUÉ

(30) Priorität: 03.03.2022 DE 102022105074
(43) Veröffentlichungstag der Anmeldung: 06.09.2023
(73) Patentinhaber: Amphenol-Tuchel Electronics GmbH, 74080 Heilbronnn (DE)
(72) Erfinder: SZYMURA, Dawid, 75245 Neulingen (DE); DEIGNER, Alena, 74348 Lauffen am Neckar (DE)
(74) Vertreter: Staeger & Sperling Partnerschaftsgesellschaft mbB

(56) Entgegenhaltungen:
- EP-A1- 0 659 548
- US-A1- 2009 169 918

## Beschreibung

Die Erfindung betrifft ein plattiertes Bimetall für Steckverbindungspartner mit der Fähigkeit zur Verformung infolge einer Temperaturänderung und der Leitung elektrischer Energie, aufweisend ein Bimetall mit zwei Schichten aus Metallen mit unterschiedlichen Temperaturausdehnungskoeffizienten und zwei äußere Schichten, bestehend aus einem kupferbasierten Werkstoff.

Zur Kontaktierung oder Herstellung lösbarer elektrisch leitender Verbindungen werden Steckverbindungen, Kontaktierungselemente, Polverbinder, Steckhülsen usw. in unterschiedlichsten Ausbildungen und Varianten eingesetzt. Insbesondere, aber nicht ausschließlich bei elektrischen Kontaktierungsaufgaben im höheren Leistungsbereich sind Kontaktsysteme entwickelt worden, die auf Rundkontaktgeometrien zur Aufnahme eines Kontaktpins basieren und deren Ausgangsmaterial aus einem flächigen Kontaktgitter besteht, dass mit hyperbolischem Drall in die Rundkontaktgeometrie gebracht wird. Diese als RADSOK bekannt gewordenen Kontaktsysteme zeichnen sich durch robuste und hochdichte Kontaktherstellung infolge der erheblichen Kontaktfläche zum jeweiligen Kontaktpin aus. Alternativ sind anstelle der hyperbolischen Verdrehsituation nach innen gerichtete Lamellengeometrien bekannt, dessen Lamellenkontaktgitter radialsymmetrisch ausgerichtet ist.

Diese vorzugsweise als Hochstromkontaktbuchsen verwendeten Kontaktgeometrien sind folglich als Radialkontaktbuchsen oder hyperbolische Kontaktbuchsen bekannt.

RADSOK-Kontaktsysteme der vorgenannten Art werden über ihre in der Regel zylindrischen Außenkonturen in Steckverbinderbuchsenhülsen aufgenommen und realisieren die Kontaktierung außenseitig über die Zylinderflächen. Die DE 10 2007 051 266 B4 basiert auf der Grundidee, eine einzige Steckverbinderbuchsenhülse bereitzustellen, die so ausgebildet ist, dass unterschiedliche Lamellenkontaktkäfige in Form von RADSOK-Kontaktbuchsen aufgenommen werden können, welche flächig an der Innenseite der Kontakthülse zur Anlage kommt.

Einen vergleichbaren Grundaufbau zeigt die DE 20 2016 100 095 U1. Erfindungsgegenstand hier ist die Kopplung, Verbindung, Kontaktierung des zylinderförmigen Lamellenkäfigs "fliegend" innerhalb der aufnehmenden Steckverbinderbuchsenhülse, dadurch, dass nur eine der die jeweils endseitigen Bunde beispielsweise durch Presspassung in der Buchse festgelegt wird. Es ist eine elektrische Steckverbinderbuchse umfassend eine zylindrische Buchsenhülse vorgesehen, welche mit einem Aufnahmeraum ausgebildet ist, in dem ein zylinderförmiger Lamellenkäfig mit einer Vielzahl von parallel verlaufenden Kontaktlamellen eingeschoben ist, wobei der Lamellenkäfig über einen ersten und zweiten endseitig umlaufenden Bundsteg verfügt, zwischen denen die Kontaktlamellen verlaufen. Der Lamellenkäfig wird an dem einen Ende zumindest axial und bevorzugt auch drehfest in der Buchsenhülse festgelegt und dadurch eingespannt bzw. befestigt und an dem anderen gegenüberliegenden Ende eine axiale und zumindest um einen gewissen Drehwinkel drehbare Gleitlagerung gegenüber der Buchsenhülse vorgesehen ist. Vorzugsweise wird der Lamellenkäfig mit seinem einen Bundsteg mittels hülsenseitigem Befestigungsmittel an der Innenwand der Buchsenhülse befestigt.

Insbesondere bei Kontaktierungsaufgaben im Hochstrombereich - beispielsweise zur Aufladung von Batterien in elektrisch angetriebenen Fahrzeugen oder die elektrische Kontaktierung der Fahrzeugbatterie mit den Verbrauchern im Fahrzeug - ist es von besonderer Wichtigkeit, dass die elektrische Kontaktierung der Steckverbindungspartner sehr zuverlässig ist. Auf derartige Steckverbindungen und deren Kontaktierungselemente, die häufig aus einer oder mehrerer Paarungen, bestehend aus Steckkontaktpin und Steckkontaktbuchse aufgebaut sind, können unterschiedliche Einflüsse einwirken, beispielsweise mechanische Belastungen, Vibrationen, Stöße, Alterungseinflüsse. Auch möglich sind erhebliche Temperatureinflüsse verursacht durch Umweltbedingungen oder infolge der Eigenerwärmung verursacht durch die fließende elektrische Leistung und den Eigenwiderstand der stromführenden Teile. Besonders relevant kann die Eigenerwärmung sein an den Kontaktstellen, da kontaktkraftbedingt die Kontaktflächen klein und somit ein quasi geometrisch verursachter hoher Widerstand vorliegen kann. Aus diesem Grund ist es von besonderer Wichtigkeit, dass die Kontaktkraft - genauer: die Kontaktnormalkraft - möglichst hoch und dauerhaft gleichbleibend ist, um die Kontaktpartner, meist gebildet durch Kontaktpin und Kontaktbuchse für deren elektrisch Kontaktierung an dessen Kontaktflächen aneinanderzupressen.

Die im Stand der Technik verfügbaren Kontaktbuchsen wie beispielsweise die erwähnten RADSOK-Buchsen oder auch deren Steckkontaktpartner, die Steckkontaktpins werden sowohl bildsame Formgebungsverfahren wie beispielsweise Stanzen, Rollen und geeignete Werkstoffe mit federnden Eigenschaften eingesetzt, um die erwünschten Federwirkungen durch Rückstellkräfte zu erzeugen die genutzt werden, um vorzugsweise elastische Anpresskräfte der Kontaktpartner an ihren Kontaktflächen zu erzeugen. Dabei wird die Leistungsfähigkeit der Steckkontaktverbindung durch auftretenden Temperatureinwirkungen begrenzt, dadurch, dass höheren Temperaturen ein Federkraftverlust infolge von Relaxierungsvorgängen, Materialkriechen und Eigenspannungsabbau bewirken. Dies gilt insbesondere für Kupfer und Kupferlegierungen, da Kupfer neben seiner generell niedrigen Elastizitätseigenschaft vor allen bereits bei niedrigen Temperaturen "weich" wird.

Werden die Steckkontaktpartner derart konstruiert und aus Werkstoffen wie beispielsweise Federstahl gebildet, ist es zwar möglich, auch sehr hohe Kontaktnormalkräfte zu erzeugen, welche die Kontaktflächen der Steckkontaktpartner zuverlässig aneinanderdrücken, aber es ergeben sich häufig Montageprobleme, dadurch, dass das Zusammenstecken der Kontaktpartner hohe Steckkräfte erfordert, welche die Montage erschweren oder den Einsatz von Werkzeugen erfordern.

Um die Problematik der sich unter Temperatureinwirkungen verringernden Kontaktnormalkräfte zu reduzieren sind Kontaktierungslösungen entwickelt worden, bei denen sich die Kontaktierungselemente oder Zusatzbauteile infolge der Temperaturerhöhung derart verformen, dass die Steigerung der Kontaktkraft erreicht wird und gleichzeitig die Montagekraft beim Zusammenstecken der Steckverbindung bei niedrigerer Temperatur geringer ist. Die EP 2 461 427 B1 offenbart einen sich selbsttätig verformenden Hochstromkontakt basierend auf dem Ansatz, durch einerseits konstruktive Auslegung des Hochstromkontakts und andererseits Vorsehen eines sich bei steigender Temperatur selbsttätig verformenden Elementes der Steckverbindung mit niedrigen Steckkräften bei Raumtemperatur für die Montage und hoher Kontaktkraft bzw. Kontaktnormalkraft während des Betriebs, insbesondere stärkerer Eigenerwärmung und bei erhöhten Umgebungstemperaturen zu erreichen.

Die Kontaktnormalkraft wird quasi selbstregelnd erhöht, sobald eine Temperaturerhöhung stattfindet. Der vorgeschlagene Hochstromkontakt dient zur Übertragung von Strom von einer Stromquelle zu einem elektrischen Leiter eines Stromabnehmers, so dass der Hochstromkontakt zusammen mit dem korrespondierenden Kontaktstift einerseits zur mechanischen Verbindung und andererseits zur elektrischen Kontaktierung des Stromabnehmers mit der Stromquelle über eine elektrische Kontaktfläche des Hochstromkontakts mit dem Kontaktstift dient. Indem die mechanische Verbindung bei durch Stromfluss steigender Temperatur des Hochstromkontakts durch den Hochstromkontakt bzw. die selbsttätig verformend ausgebildeten Bauteile, insbesondere einem ringförmigen Element durch die temperaturinitiierte Verformung gesteigert wird, wird die dem werkstoffbedingten Kontaktnormalkraftverlust entgegengewirkt und Kontaktkraft zumindest aufrechterhalten, teils sogar gesteigert. Gleichzeitig ist das Zusammenstecken bei niedrigen Temperaturen mit verringerter Steckkraft möglich.

Einen ähnlichen Ansatz verfolgt die DE 10 2005 032 462 A1. Gelehrt wird hier die Kontaktbuchse derart auszugestalten, dass zumindest der Bereich der Kontaktkuppen aus einem Bimetall besteht. Der mit dem Bimetall ausgestaltete Bereich verändert seine Form aufgrund eines Wärmeeinflusses. Diese Formänderung wird genutzt, die Kontaktnormalkraft zumindest konstant zu halten oder ansteigen zu lassen.

Die im Stand der Technik verfügbaren Kontaktierungslösungen mit der temperaturabhängigen Veränderung der Kontaktnormalkraft und aufgebaut durch die Kombination von Kontaktbuchse und Kontaktpin weisen teils erhebliche Nachteile auf. Häufig findet man Lösungen, welche ein oder mehrere Bauteile wie beispielsweise Ringe oder rohrförmige Bauteile aufweisen, welche die Kontaktnormalkraft infolge einer Temperaturveränderung beeinflussen. Diese Lösungen sind aufwändig, erfordern mehrteilige Kontaktierungsanordnungen, sind dadurch schwieriger zu montieren und haben erhöhtes Potential von Fehlmontagen. Daraus ergeben sich wirtschaftlich ungünstige Lösungen und begünstigen Fehlfunktionen.

Andere Kontaktierungausgestaltungen integrieren die sich unter Temperatureinwirkung verformenden Komponenten der Kontaktierung bzw. Steckverbindung in das Kontaktbuchsenbauteil. Mit derart geometrischen Ausgestaltungen können durch die temperaturabhängige Verformung zwar durch einen einfachen Kontaktpartneraufbau realisiert werden, jedoch sind die Werkstoffe mit temperaturabhängigen Verformungseigenschaften keine guten Leiter elektrischer Energie, da ihr elektrischer Widerstand geringer ist Folge dieser Werkstoffeigenschaft sind elektrische Leistungsverluste und stärkere Erwärmung, Temperaturerhöhung der Kontaktelemente aus Bimetallen. Diese Problematik ist besonders relevant, wenn diese Kontaktpartner in Steckverbindungen für Hochvoltanwendungen eingesetzt werden.

Diese Problematik ist im Stand der Technik bekannt. Die DE 30 45 700 A1 offenbart eine Steckverbindung mit einer Steckerbuchse, deren Federklammern aus einem thermobimetallischen Material bestehen und so bemessen sind, dass bei Umgebungstemperatur die Buchse für die Aufnahme des für sie vorgesehenen Steckerstiftes hinreichend geöffnet ist, während sie bei Betriebstemperatur auf den Steckerstift einen Druck ausübt, der stärker ist als der nur durch die beim Einführen des Steckerstiftes in die Buchse durch elastische Auslenkung der Buchse erzielte Druck. Dabei erkennt die Lehre der DE 30 45 700 A1, dass Bimetallwerkstoffe schlechtere elektrische Leitfähigkeitseigenschaften aufweisen und es daher vorteilhaft ist, wenn das Bimetall eine weitere, gut leitfähige Schicht aufweist, d. h. wenn das Bimetall aus drei oder mehreren Schichten besteht, bei der eine aus elektrisch gut leitendem Material besteht.

Die EP 0 659 548 offenbart ein plattiertes Bimetall gemäß dem Oberbegriff des Anspruchs 1.

Um diese Mehrschichtmetalle bestehend aus einem Bimetall, welche aus zwei Werkstoffen mit voneinander abweichenden Ausdehnungskoeffizienten gebildet sind und wenigstens einem weiteren gut leitfähigen Material bereitzustellen, ist es bekannt, dass Bimetalle mittels eines Galvanisierungsprozesses mit elektrisch leitenden Oberflächenschichten versehen werden. Um Kupfer aufzugalvanisieren ist hohe elektrische Energie und/oder chemische Substanzen für das Elektrolytbad erforderlich, die Umweltbelastungen nach sich ziehen. Auch sind die erzielbaren Schichtdicken nur sehr dünn.

Es ist Aufgabe der Erfindung, die bestehenden Bimetallwerkstoffe mit temperaturänderungsverursachten Verformungseigenschaften für elektrisch leitende Steckverbindungen weiterzuentwickeln und die bestehenden Nachteile wenigstens teilweise zu reduzieren.

Zur Lösung der Aufgabe schlägt die Erfindung ein plattiertes Bimetall vor. Dazu wird ein Bimetall, d. h. ein aus zwei Metallschichten mit unterschiedlichen temperaturänderungsinduzierten Ausdehnungskoeffizienten bestehendes Material, durch Walzplattieren mit einer kupferwerkstoffbasierten Oberschicht und einer kupferwerkstoffbasierten Unterschicht versehen. Das bedeutet, dass die so gebildeten äußeren Kupferwerkstoffschichten in ihrer Schichtdicke infolge des Walzplattierverfahrens in einem weiten Bereich wählbar und deutlich über den Schichtdicken, welche durch Galvanisierung erzielbar sind, gewählt werden können. Dadurch können Kupferwerkstoffschichtdicken realisiert werden, die sehr gute Stromleitfähigkeit aufweisen durch den sich ergebenden geringen elektrischen Widerstand.

Die äußeren Oberflächen bildenden kupferwerkstoffbasierten Schichten in Form einer Kupferwerkstoffoberschicht und einer Kupferwekstoffunterschicht beeinflussen die temperaturänderungsinduzierten Verformungseigenschaften des Bimetalls nicht oder nur gering, da diese ober- und unterseitig des Bimetalls und damit symmetrisch angeordnet sind. Möglicherweise kann es zu zeitlich verzögerter Verformung durch Temperaturänderung kommen, dadurch, dass die Wärmeenergie zunächst die Kupferwerkstoffschichten durchdringen muss.

Das erfindungsgemäß vorgeschlagene plattierte Bimetall ist als Halbzeug und damit Ausgangsmaterial für Steckverbindungspartner mit temperaturänderungsinduzierten Verformungseigenschaften wie beispielsweise Kontaktbuchsen, Kontaktstecker, Kontaktpins, Zwischenhülse und andere Kontaktpartnerelemente in besonders vorteilhafter Weise geeignet, da Steckverbindungspartner häufig die durch das plattierte Bimetall unterstützten Eigenschaften
- Kontaktnormalkraftänderung bei unterschiedlichen Temperaturen infolge der temperaturänderungsinduzierten Verformung des plattierten Bimetalls und
- gute elektrische Leitfähigkeit infolge des geringen elektrischen Widerstandes der Kupferschichten des plattierten Bimetalls mit dessen bereitgestellten Kupferschichtdicken
realisieren können müssen.

Das Herstellungsverfahren des Walzplattierens ist in einem kontinuierlichen Prozess wirtschaftlich möglich und bietet darüber hinaus den Vorteil, dass das Galvanisieren mit seinen umweltbelastenden Auswirkungen unterbleibt. Auch ist es vorteilhaft, dass die plattierten Bimetalle problemlos durch Stanzen und Kalt- oder Warmverformung wie zum Beispiel Rollen oder Abkanten in der Geometrie und Dimension verarbeitet und zu Steckverbindungspartnern wirtschaftlich und massenherstellungstauglich weiterverarbeitet werden können.

Die Erfindung wird im Folgenden anhand eines exemplarischen Ausführungsbeispiels in Verbindung mit der Figur näher erläutert. Dabei zeigt:

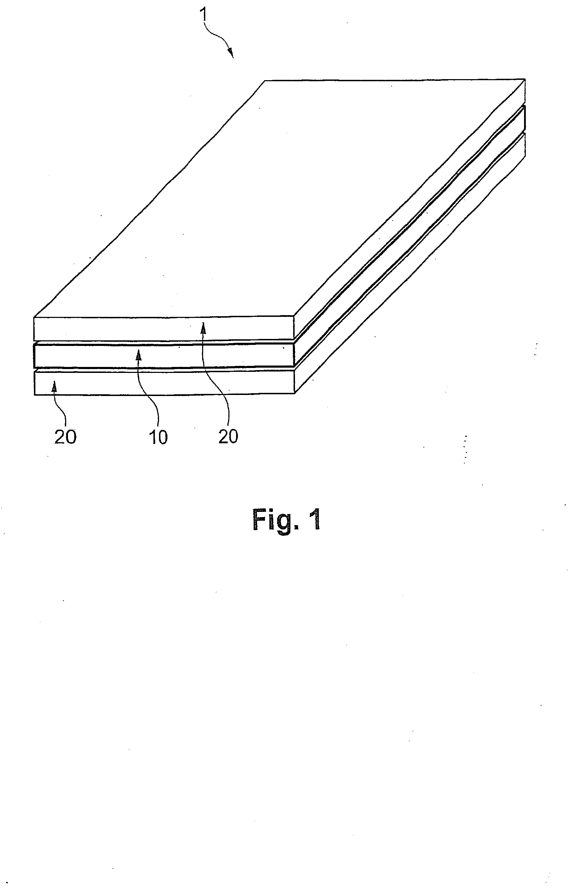

- Fig. 1: die schematische, perspektivische Ansicht auf das plattierte Bimetall.
In der Figur 1 ist der sandwichartige Aufbau des plattierten Bimetalls 1 dargestellt. Zwischen zwei äußeren kupferwerkstoffbasierten Schichten 20 ist das Bimetall 10 angeordnet. Die äußeren kupferwerkstoffbasierten Schichten 20 sind vorzugsweise von annähernd gleicher Schichtdicke zueinander sowie auch zum Bimetall 10 und durch einen Walzplattierprozess im Wesentlichen stoffschlüssig mit dem Bimetall 10 verbunden. Besonders gute und innige stoffschlüssige Verbindungen der kupferwerkstoffbasierten Schichten 20 mit dem Bimetall 10 sind durch Walzplattierprozesse mit erhöhter Temperatur realisierbar, dies besonders wirtschaftlich dadurch, dass die kupferwerkstoffbasierten Schichten 20 aus dem "ersten Feuer" und damit der vorliegenden erhöhten Temperatur unmittelbar nach dessen Herstellung (beispielsweise Strangguss mit Weiterverarbeitung zum Feinblech) walzplattiert werden.

### Bezugszeichenliste

- 1: plattiertes Bimetall
- 10: Bimetall
- 20: Schicht aus Kupferwerkstoff, Kupferschicht

## Patentansprüche

1. Plattiertes Bimetall (1) für Steckverbindungspartner mit der Fähigkeit zur Verformung infolge einer Temperaturänderung und der Leitung elektrischer Energie, aufweisend ein Bimetall (10) mit zwei Schichten aus Metallen mit unterschiedlichen Temperaturausdehnungskoeffizienten und zwei äußere Schichten (20), bestehend aus einem kupferbasierten Werkstoff, **dadurch gekennzeichnet, dass** die äußeren kupferwerkstoffbasierten Schichten (20) durch Walzplattieren aufgebracht sind, **dadurch gekennzeichnet, dass** das Schichtdickenverhältnis zwischen jeder kupferwerkstoffbasierten Schicht (20) und dem Bimetall (10) in etwa 1 ist.

2. Plattiertes Bimetall (1) gemäß Anspruch 1, **dadurch gekennzeichnet, dass** die kupferwerkstoffbasierten Schichten (20) weitgehend gleiche Schichtdicke aufweisen.

3. Steckverbindungspartner mit temperaturänderungsinduzierten Verformungseigenschaften, mit einem plattierten Bimetall (1) gemäß einem der vorgehenden Ansprüche.

## Claims

1. Clad bimetal (1) for plug connection partners with the ability to deform as a result of a change in temperature and the conduction of electrical energy, comprising a bimetal (10) having two layers of metals with different coefficients of temperature expansion and two outer layers (20), consisting of a copper-based material, **characterized in that** the outer copper material-based layers (20) are applied by roll cladding, **characterized in that** the layer thickness ratio between each copper material-based layer (20) and the bimetal (10) is approximately 1.

2. Clad bimetal (1) according to Claim 1, **characterized in that** the copper material-based layers (20) have largely the same layer thickness.

3. Plug connection partner with deformation properties induced by a change in temperature, comprising a clad bimetal (1) according to any of the preceding claims.

## Revendications

1. Bilame plaqué (1) pour connecteurs enfichables avec la capacité de se déformer suite à une variation de température et de conduire une énergie électrique, comportant un bilame (10) avec deux couches en métal avec différents coefficients de dilatation thermique et deux couches extérieures (20), constituées d'un matériau à base de cuivre, **caractérisé en ce que** les couches extérieures (20) à base d'un matériau en cuivre sont appliquées par plaquage par laminage, **caractérisé en ce que** le rapport d'épaisseur de couche entre chaque couche (20) à base d'un matériau en cuivre et le bilame (10) est de l'ordre d'environ 1.

2. Bilame plaqué (1) selon la revendication 1, **caractérisé en ce que** les couches (20) à base d'un matériau en cuivre présentent des épaisseurs de couche largement identiques.

3. Connecteurs enfichables avec des propriétés de déformation induites par une variation de température, avec un bilame plaqué (1) selon l'une des revendications précédentes.
